(19)

Europäisches
Patentamt
European
Patent Office
Office européen
des brevets

(11) **EP 3 026 967 A1**

(12) **EUROPEAN PATENT APPLICATION**
published in accordance with Art. 153(4) EPC

(43) Date of publication:
**01.06.2016 Bulletin 2016/22**

(21) Application number: **14894186.7**

(22) Date of filing: **19.08.2014**

(51) Int Cl.:
**H04W 56/00** (2009.01)

(86) International application number:
**PCT/CN2014/084727**

(87) International publication number:
**WO 2016/026086 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **JI, Tong**
**Shenzhen**
**Guangdong 518129 (CN)**

• **WU, Yiling**
**Shenzhen**
**Guangdong 518129 (CN)**
• **ZHANG, Weiliang**
**Shenzhen**
**Guangdong 518129 (CN)**

(74) Representative: **Gill Jennings & Every LLP**
**The Broadgate Tower**
**20 Primrose Street**
**London EC2A 2ES (GB)**

(54) **SYNCHRONIZATION SIGNAL TRANSMITTING DEVICE, RECEIVING DEVICE, METHOD, AND SYSTEM**

(57)    The present application provides a synchronization signal sending apparatus, sending method, receiving apparatus, and receiving method, and a system. The signal sending apparatus includes a determining unit and a sending unit. By using embodiments of the present invention, a synchronization signal is in a form of a differential signal, and has relatively strong frequency deviation resistance; and synchronization signals from different transmit ends satisfy a pre-determined relationship property. Therefore, when a receive end performs synchronization by using the synchronization signal, the receive end can eliminate an interfering signal by using the relationship property between the synchronization signals from the different transmit ends, so as to achieve an objective of distinguishing the different transmit ends or distinguishing signals from different cells.

FIG. 1B

EP 3 026 967 A1

## Description

## TECHNICAL FIELD

The present invention relates to a field, and in particular, to a synchronization signal sending method, sending apparatus, receiving method, and receiving apparatus, and a system.

## BACKGROUND

A machine-to-machine (Machine-To-Machine, M2M for short) technology is a networked application and service in which a machine is used as a terminal and a core is intelligent interaction. The M2M technology implements cooperative work between machines by means of data transmission between the machines, which greatly improves production efficiency. As mobile communications technologies develop, applications based on the M2M technology, such as a smart metering, vehicle condition monitoring, Internet of Vehicles and industrial monitoring, have gradually become popular application services.

An application scenario of the M2M technology determines that a communication manner that meets requirements such as low power consumption, deep coverage and low costs needs to be used, during communication, for a terminal in the M2M technology. Narrowband transmission is an extremely effective technical method to reduce uplink and downlink channel transmission bandwidth, so as to meet requirements such as low power consumption, deep coverage, and low costs; therefore, in the M2M technology, a narrowband transmission technology may be used to implement communication between different devices. Further, different devices, different cells, or different cell groups may also use a single-frequency network, and different transmit-end devices may perform communication by means of frequency multiplexing, which improves spectrum utilization and system capacity.

However, when the narrowband communications technology is used to transmit data, a terminal is relatively sensitive to carrier frequency deviation and phase interference in a channel. In addition, adjacent cell interference easily occurs in the single-frequency network. Therefore, how to eliminate adjacent cell interference and distinguish synchronization signals from different transmit-end devices or from different cells in the M2M technology becomes a problem that needs to be resolved.

## SUMMARY

Embodiments of the present invention provide a synchronization signal sending method, sending apparatus, receiving method, and receiving apparatus, and a system, which can easily distinguish signals from different transmit-end devices or from different cells.

According to a first aspect, an embodiment of the present invention provides a synchronization signal sending apparatus, including: a determining unit, configured to determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells; and a sending unit, configured to send the synchronization signal, so that a receive end completes signal synchronization by using the synchronization signal.

With reference to the first aspect, in a first possible implementation manner of the first aspect, the determining unit is specifically configured to determine the synchronization signal from the first transmit end, where the synchronization signal is the signal obtained by performing differential processing on the synchronization sequence; the synchronization sequence is a product of the basic sequence and the first feature sequence; the basic sequence is the sequence in a sequence set in which sequences are cross-correlated; the first feature sequence corresponds to the cell identifier of the cell in which the first transmit end is located, and is orthogonal, in the case of any delay, to the second feature sequence corresponding to the second transmit end; the second transmit end and the first transmit end are located in different cells; the basic sequence is a pseudo-random sequence, a gold sequence, or a ZC sequence; and the first feature sequence is a Hadamard sequence or a Walsh sequence.

With reference to the first aspect, in a second possible implementation manner of the first aspect, the determining unit includes: an identifier determining subunit, configured to determine the cell identifier of the cell in which the first transmit end is located; a basic sequence determining subunit, configured to determine the basic sequence corresponding to the cell identifier; a feature sequence determining subunit, configured to determine the first feature sequence corresponding to the cell identifier; a synchronization sequence generating subunit, configured to perform scalar multiplication or conjugate multiplication on the basic sequence and the first feature sequence, so as to obtain the synchronization sequence; and a synchronization signal generating subunit, configured to perform differential processing on the synchronization sequence to obtain the synchronization signal.

With reference to the second possible implementation manner of the first aspect, in a third possible implementation manner of the first aspect, the basic sequence determining subunit is specifically configured to use, as the basic sequence, a pseudo-random sequence or a gold sequence generated by using an initialization seed corresponding to the cell identifier, or use, as the basic sequence, a ZC sequence corresponding to a root sequence number corresponding to the cell identifier.

With reference to the second possible implementation manner of the first aspect or the third possible implementation manner of the first aspect, in a fourth possible implementation manner of the first aspect, the feature sequence determining subunit is specifically configured to determine that a Hadamard sequence or a Walsh sequence corresponding to the cell identifier is the first feature sequence.

According to a second aspect, an embodiment of the present invention provides a synchronization signal sending apparatus, including: a receiving unit, configured to receive, by a receive end, a received signal including a synchronization signal; a determining unit, configured to determine a sequence group used to generate the synchronization signal, where the sequence group includes a basic sequence and a feature sequence; and a synchronization unit, configured to complete synchronization by using the sequence group and the received signal.

With reference to the second aspect, in a first possible implementation manner of the second aspect, the determining unit includes: an identifier determining subunit, configured to determine a cell identifier of a cell in which the transmit end is located; and a sequence group determining subunit, configured to determine the sequence group corresponding to the cell identifier.

With reference to the second aspect, in a second possible implementation manner of the second aspect, the determining unit includes: a determining subunit, configured to determine all candidate sequence combinations, where each candidate sequence combination includes a candidate feature sequence and a candidate basic sequence; a calculation subunit, configured to separately calculate a correlated peak of each candidate sequence combination and the received signal; and a selection subunit, configured to use, as the sequence group, a candidate sequence combination corresponding to a maximum correlated peak.

With reference to the second possible implementation manner of the second aspect, in a third possible implementation manner of the second aspect, the calculation subunit includes: a sliding window operation subunit, configured to perform sliding window operation on the received signal to determine at least one sliding window, where a length of the sliding window is a length of the candidate synchronization sequence plus 1 bit; a correlated value determining subunit, configured to calculate a correlated value of a sliding window signal in each sliding window of the received signal and the candidate sequence combination; and a correlated peak determining subunit, configured to use a maximum correlated value as the correlated peak of the candidate sequence combination and the received signal.

With reference to the third possible implementation manner of the second aspect, in a fourth possible implementation manner of the second aspect, the correlated value determining subunit includes: a differential demodulation subunit, configured to perform differential demodulation on the sliding window signal to obtain a first sequence; a feature removing subunit, configured to perform feature removing processing on the first sequence by using the candidate feature sequence, to obtain a second sequence, where the feature removing processing is scalar multiplication or conjugate multiplication; and a correlated value calculation subunit, configured to calculate a correlated value of the second sequence and the candidate basic sequence.

With reference to the second aspect or any one of the first to fourth possible implementation manners of the second aspect, in a fifth possible implementation manner of the second aspect, the synchronization unit is specifically configured to use a location of the correlated peak of the sequence group and the received signal as a start location of the synchronization signal in the received signal, so as to complete symbol timing synchronization.

With reference to the second aspect or any one of the first to fourth possible implementation manners of the second aspect, in a fifth possible implementation manner of the second aspect, the synchronization unit includes: an estimation subunit, configured to perform carrier frequency deviation estimation on the third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and a compensation subunit, configured to perform frequency compensation on the received signal by using the carrier frequency deviation estimation value, so as to complete carrier frequency synchronization.

According to a third aspect, an embodiment of the present invention provides a synchronization signal sending apparatus, including: a determining unit, configured to determine a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells; and a sending unit, configured to send the synchronization signal, so that a receive end completes signal synchronization by using the synchronization signal.

With reference to the third aspect, in a first possible implementation manner of the third aspect, the determining unit includes: an identifier determining subunit, configured to determine a cell identifier of a cell in which the transmit end is located; a synchronization sequence determining subunit, configured to determine the first synchronization sequence corresponding to the cell identifier; and a synchronization signal generating subunit, configured to perform differential processing on the first synchronization sequence to obtain the synchronization signal.

With reference to the third aspect or the first possible implementation manner of the third aspect, in a second possible implementation manner of the third aspect, the synchronization sequence determining subunit is specifically configured to determine the first synchronization sequence corresponding to the cell identifier, where the first synchronization sequence is a pseudo-random sequence, a gold sequence, or a ZC sequence.

According to a fourth aspect, an embodiment of the present invention provides a synchronization signal receiving apparatus, including: a receiving unit, configured to receive, by a receive end, a received signal including a synchronization signal; a determining unit, configured to determine a synchronization sequence used to generate the synchronization signal; and a synchronization unit, configured to complete synchronization by using the synchronization sequence and the received signal.

With reference to the fourth aspect, in a first possible implementation manner of the fourth aspect, the determining unit includes: an identifier determining subunit, configured to determine a cell identifier of a cell in which the transmit end is located; and a synchronization sequence determining subunit, configured to determine the synchronization sequence corresponding to the cell identifier.

With reference to the fourth aspect, in a second possible implementation manner of the fourth aspect, the determining unit includes: a determining subunit, configured to determine all candidate synchronization sequences; a calculation subunit, configured to separately calculate a correlated peak of each candidate synchronization sequence and the received signal; and a selection subunit, configured to use, as the synchronization sequence, a candidate synchronization sequence corresponding to a maximum correlated peak.

With reference to the second possible implementation manner of the fourth aspect, in a third possible implementation manner of the fourth aspect, the calculation subunit includes: a sliding window operation subunit, configured to perform sliding window operation on the received signal to determine at least one sliding window, where a length of the sliding window is a length of the candidate synchronization sequence plus 1 bit; a correlated value determining subunit, configured to calculate a correlated value of a sliding window signal in each sliding window of the received signal and the candidate synchronization sequence; and a correlated peak determining subunit, configured to use a maximum correlated value as the correlated peak of the candidate synchronization sequence and the received signal.

With reference to the third possible implementation manner of the fourth aspect, in a fourth possible implementation manner of the fourth aspect, the correlated value determining subunit includes: a differential demodulation subunit, configured to perform differential demodulation on the sliding window signal to obtain a first sequence; and a correlated value calculation subunit, configured to calculate a correlated value of the first sequence and the candidate synchronization sequence.

With reference to the fourth aspect or any one of the first to fourth possible implementation manners of the fourth aspect, in a fifth possible implementation manner of the fourth aspect, the synchronization unit is specifically configured to use a location of the correlated peak of the synchronization sequence and the received signal as a start location of the synchronization signal in the received signal, so as to complete symbol timing synchronization.

With reference to the fourth aspect or any one of the first to fourth possible implementation manners of the fourth aspect, in a sixth possible implementation manner of the fourth aspect, the synchronization unit includes: an estimation subunit, configured to perform carrier frequency deviation estimation on a second sequence by using the synchronization sequence, to obtain a carrier frequency deviation estimation value, where the second sequence is obtained by performing differential demodulation on the synchronization signal; and a compensation subunit, configured to perform frequency compensation on the received signal by using the carrier frequency deviation estimation value, so as to complete carrier frequency synchronization.

According to a fifth aspect, an embodiment of the present invention provides a synchronization signal sending method, including:

determining a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells; and sending the synchronization signal, so that a receive end completes signal synchronization by using the synchronization signal.

With reference to the fifth aspect, in a first possible implementation manner of the fifth aspect, the basic sequence is a pseudo-random sequence, a gold sequence, or a ZC sequence; and the first feature sequence is a Hadamard sequence or a Walsh sequence.

With reference to the fifth aspect, in a second possible implementation manner of the fifth aspect, the determining a synchronization signal from a transmit end of the present invention includes: determining the cell identifier of the cell in which the first transmit end is located; determining the basic sequence corresponding to the cell identifier; determining the first feature sequence corresponding to the cell identifier; performing scalar multiplication or conjugate multiplication on the basic sequence and the first feature sequence, so as to obtain the synchronization sequence; and performing differential processing on the synchronization sequence to obtain the synchronization signal.

With reference to the second possible implementation manner of the fifth aspect, in a third possible implementation manner of the fifth aspect, the determining the basic sequence corresponding to the cell identifier includes: using, as the basic sequence, a pseudo-random sequence or a gold sequence generated by using an initialization seed corresponding to the cell identifier; or using, as the basic sequence, a ZC sequence corresponding to a root sequence number corresponding to the cell identifier.

With reference to the second possible implementation manner of the fifth aspect or the third possible implementation manner of the fifth aspect, in a fourth possible implementation manner of the fifth aspect, the determining the first feature sequence corresponding to the cell identifier includes: determining that a Hadamard sequence or a Walsh sequence corresponding to the cell identifier is the first feature sequence.

According to a sixth aspect, an embodiment of the present invention provides a synchronization signal receiving method, including: receiving, by a receive end, a received signal including a synchronization signal; determining a sequence group used to generate the synchronization signal, where the sequence group includes a basic sequence and a feature sequence; and completing synchronization by using the sequence group and the received signal.

With reference to the sixth aspect, in a first possible implementation manner of the sixth aspect, the determining a sequence group used to generate the synchronization signal includes: determining a cell identifier of a cell in which the transmit end is located; and determining the sequence group corresponding to the cell identifier.

With reference to the sixth aspect, in a second possible implementation manner of the sixth aspect, the determining a sequence group used to generate the synchronization signal includes: determining all candidate sequence combinations, where each candidate sequence combination includes a candidate feature sequence and a candidate basic sequence; separately calculating a correlated peak of each candidate sequence combination and the received signal; and using, as the sequence group, a candidate sequence combination corresponding to a maximum correlated peak.

With reference to the second possible implementation manner of the sixth aspect, in a third possible implementation manner of the sixth aspect, the correlated peak of each candidate sequence combination and the received signal is separately calculated in the following manner: performing sliding window operation on the received signal to determine at least one sliding window, where a length of the sliding window is a length of the candidate synchronization sequence plus 1 bit; calculating a correlated value of a sliding window signal in each sliding window of the received signal and the candidate sequence combination; and using a maximum correlated value as the correlated peak of the candidate sequence combination and the received signal.

With reference to the third possible implementation manner of the sixth aspect, in a fourth possible implementation manner of the sixth aspect, a correlated peak of the sliding window signal in each sliding window and the candidate sequence combination is calculated in the following manner: performing differential demodulation on the sliding window signal to obtain a first sequence; performing feature removing processing on the first sequence by using the candidate feature sequence, to obtain a second sequence, where the feature removing processing is scalar multiplication or conjugate multiplication; and calculating a correlated value of the second sequence and the candidate basic sequence.

With reference to the fourth possible implementation manner of the sixth aspect, in a fifth possible implementation manner of the sixth aspect, the completing synchronization by using the sequence group and the received signal includes: using a location of the correlated peak of the sequence group and the received signal as a start location of the synchronization signal in the received signal, so as to complete symbol timing synchronization.

With reference to the sixth aspect or any one of the first to fifth possible implementation manners of the sixth aspect, in a sixth possible implementation manner of the sixth aspect, the completing synchronization by using the sequence group and the received signal includes: performing carrier frequency deviation estimation on the third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and performing frequency compensation on the received signal by using the carrier frequency deviation estimation value, so as to complete carrier frequency synchronization.

According to a seventh aspect, an embodiment of the present invention provides a synchronization signal sending method, including: determining a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells; and sending the synchronization signal, so that a receive end completes signal synchronization by using the synchronization signal.

With reference to the seventh aspect, in a first possible implementation manner of the seventh aspect, the determining a synchronization signal from a first transmit end includes: determining the cell identifier of the cell in which the transmit end is located; determining the first synchronization sequence corresponding to the cell identifier; and performing differential processing on the first synchronization sequence to obtain the synchronization signal.

With reference to the seventh aspect or the first possible implementation manner of the seventh aspect, in a second possible implementation manner of the seventh aspect, the first synchronization sequence is a pseudo-random sequence, a gold sequence, or a ZC sequence.

According to an eighth aspect, an embodiment of the present invention provides a synchronization signal receiving method, including: receiving, by a receive end, a received signal including a synchronization signal; determining a synchronization sequence used to generate the synchronization signal; and completing synchronization by using the synchronization sequence and the received signal.

With reference to the eighth aspect, in a first possible implementation manner of the eighth aspect, the determining a synchronization sequence used to generate the synchronization signal includes: determining a cell identifier of a cell in which the transmit end is located; and determining the synchronization sequence corresponding to the cell identifier.

With reference to the eighth aspect, in a second possible implementation manner of the eighth aspect, the determining a synchronization sequence used to generate the synchronization signal includes: determining all candidate synchronization sequences; separately calculating a correlated peak of each candidate synchronization sequence and the received signal; and using, as the synchronization sequence, a candidate synchronization sequence corresponding to a maximum correlated peak.

With reference to the second possible implementation manner of the eighth aspect, in a third possible implementation manner of the eighth aspect, the correlated peak of each candidate synchronization sequence and the received signal is separately calculated in the following manner: performing sliding window operation on the received signal to determine at least one sliding window, where a length of the sliding window is a length of the candidate synchronization sequence plus 1 bit; calculating a correlated value of a sliding window signal in each sliding window of the received signal and the candidate synchronization sequence; and using a maximum correlated value as the correlated peak of the candidate synchronization sequence and the received signal.

With reference to the third possible implementation manner of the eighth aspect, in a fourth possible implementation manner of the eighth aspect, the correlated value of the sliding window signal in each sliding window and the candidate synchronization sequence is calculated in the following manner: performing differential demodulation on the sliding window signal to obtain a first sequence; and calculating a correlated value of the first sequence and the candidate synchronization sequence.

With reference to the eighth aspect or any one of the first to fourth possible implementation manners of the eighth aspect, in a fifth possible implementation manner of the eighth aspect, the completing synchronization by using the synchronization sequence and the received signal includes: using a location of the correlated peak of the synchronization sequence and the received signal as a start location of the synchronization signal in the received signal, so as to complete symbol timing synchronization.

With reference to the eighth aspect or any one of the first to fourth possible implementation manners of the eighth aspect, in a sixth possible implementation manner of the eighth aspect, the completing synchronization by using the synchronization sequence and the received signal includes: performing carrier frequency deviation estimation on a second sequence by using the synchronization sequence, to obtain a carrier frequency deviation estimation value, where the second sequence is obtained by performing differential demodulation on the synchronization signal; and performing frequency compensation on the received signal by using the carrier frequency deviation estimation value, so as to complete carrier frequency synchronization.

In the embodiments of the present invention, the synchronization signal sending apparatus includes a determining unit and a sending unit. The determining unit is configured to determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells. The sending unit is configured to send the synchronization signal, so that a receive end completes signal synchronization by using the synchronization signal. It can be seen from the embodiments of the present invention that, in the present invention, a synchronization signal is in a form of a differential signal, and has relatively strong frequency deviation resistance; and synchronization signals from different transmit ends satisfy a pre-determined relationship property. Therefore, when a receive end performs synchronization by using the synchronization signal, the receive end can eliminate an interfering signal by using a relationship property between the synchronization signals from the different transmit ends, so as to achieve an objective of distinguishing the different transmit ends or distinguishing signals from different cells.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.

FIG. 1A is a schematic diagram of an embodiment of a synchronization signal sending apparatus according to the present invention;
FIG. 1B is a schematic diagram of an embodiment of a determining unit in a synchronization signal sending apparatus according to the present invention;
FIG. 2 is a schematic diagram of an embodiment of a synchronization signal receiving apparatus according to the present invention;
FIG. 3 is a schematic diagram of an embodiment of a synchronization signal sending apparatus according to the present invention;
FIG. 4 is a schematic diagram of an embodiment of a synchronization signal receiving apparatus according to the present invention;
FIG. 5 is a flowchart of an embodiment of a synchronization signal sending method according to the present invention;
FIG. 6 is a flowchart of an embodiment of a synchronization signal receiving method according to the present invention;
FIG. 7 is a flowchart of an embodiment of a synchronization signal sending method according to the present invention;
FIG. 8 is a flowchart of an embodiment of a synchronization signal receiving method according to the present invention;
FIG. 9 is a schematic diagram of an embodiment of a signal transmission system according to the present invention;
FIG. 10 is a schematic diagram of an embodiment of a signal transmission system according to the present invention;
FIG. 11 is a schematic diagram of an embodiment of a synchronization signal sending apparatus according to the present invention;
FIG. 12 is a schematic diagram of an embodiment of a synchronization signal receiving apparatus according to the present invention;
FIG. 13 is a schematic diagram of an embodiment of a synchronization signal sending apparatus according to the present invention; and
FIG. 14 is a schematic diagram of an embodiment of a synchronization signal receiving apparatus according to the present invention.

**DESCRIPTION OF EMBODIMENTS**

To make a person skilled in the art understand the technical solutions in the present invention better, the following clearly and completely describes the technical solutions in the embodiments of the present invention with reference to the accompanying drawings in the embodiments of the present invention. Apparently, the described embodiments are only a part rather than all of the embodiments of the present invention. All other embodiments obtained by a person of ordinary skill in the art based on the embodiments of the present invention without creative efforts shall fall within the protection scope of the present invention.

In the embodiments of the present invention, a transmit end may refer to a device with a sending function in a communications system, and may be, for example, an M2M terminal, UE, an AP, a Ralay node, or a base station. Similarly, a receive end may refer to a device with a receiving function in a communications system, and may be, for example, an M2M terminal, UE, an AP, a Ralay node, or a base station. A first transmit end refers to a data sending device that executes the present invention, and a second transmit end refers to another device different from the first transmit end. For example, the first transmit end and the second transmit end may be base stations located in different cells.

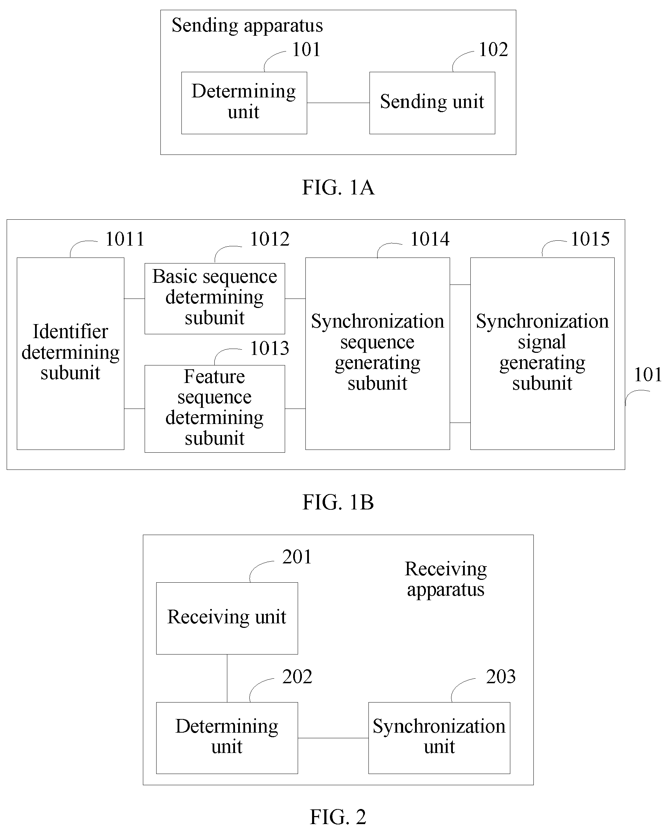

Referring to FIG. 1A, FIG. 1A is a schematic diagram of an embodiment of a synchronization signal sending apparatus according to the present invention. The sending apparatus may be disposed on a transmit end, or may be a transmit end.

As shown in FIG. 1A, the apparatus includes a determining unit 101 and a sending unit 102.

The determining unit 101 is configured to determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells.

In different implementation manners, the determining unit 101 may generate a synchronization signal, or may acquire a synchronization signal already generated by the synchronization signal sending apparatus or another device.

As shown in FIG. 1B, in a possible implementation manner, the determining unit 101 includes: an identifier determining subunit 1011, configured to determine the cell identifier of the cell in which the first transmit end is located; a basic sequence determining subunit 1012, configured to determine the basic sequence corresponding to the cell identifier; a feature sequence determining subunit 1013, configured to determine the first feature sequence corresponding to the cell identifier; a synchronization sequence generating subunit 1014, configured to perform scalar multiplication or conjugate multiplication on the basic sequence and the first feature sequence, so as to obtain the synchronization sequence; and a synchronization signal generating subunit 1015, configured to perform differential processing on the synchronization sequence to obtain the synchronization signal.

The basic sequence determining subunit 1012 may be configured to use, as the basic sequence, a pseudo-random sequence or a gold sequence generated by using an initialization seed corresponding to the cell identifier, or use, as the basic sequence, a ZC sequence corresponding to a root sequence number corresponding to the cell identifier.

The feature sequence determining subunit 1013 may be configured to determine that a Hadamard sequence or a Walsh sequence corresponding to the cell identifier is the first feature sequence.

During determining of the first feature sequence, it may be determined that the Hadamard sequence or the Walsh sequence corresponding to the cell identifier of the cell in which the first transmit end is located is the first feature sequence. An example in which $w_1$, $w_2$,..., $w_2$ indicates a feature sequence is used, and the first feature sequence and the second feature sequence are orthogonal in the case of any delay, which may be represented by a formula

$$\forall \tau, \sum_{i=1}^{n} \left( w_i^k \times \overline{w_{i+\tau}^h} \right) = \sum_{i=1}^{n} \left( w_i^k \times \overline{w_i^k} \right), \text{ where } w_i^k \text{ is}$$

the first feature sequence, $w_i^h$ is the second feature sequence $\tau$ is a delay, and $k \neq h$. It should be noted herein that, in the present invention, $A$ indicates a conjugate *of* $A$ ; and *if B < xA,* it may be considered that $B = A$ , where

$0 < x < 1$. For example, if $x=0.2$, when $B < 0.2A$, it may be considered that $B = A$.

If the synchronization sequence is $b_1, b_2,...,b_n$, the synchronization signal $u_1,...,u_{n+1}$ obtained after performing differential processing on the synchronization sequence is generated by using a formula:

$$u_i = \begin{cases} c, (i = 1) \\ u_{i-1} b_{i-1}, (i = 2, 3, ..., n+1) \end{cases} \text{ where } c \text{ is a preset}$$

fixed constant, and may be, for example, 1.

The sending unit 102 is configured to send the synchronization signal, so that a receive end completes signal synchronization by using the synchronization signal.

After the synchronization signal is determined, the first transmit end may directly send the synchronization signal, or may send the synchronization signal after further processing is performed on the synchronization signal. For example, the synchronization signal may be sent after processing such as sampling and resource mapping, and a specific process is not described in detail herein.

It is verified that there are multiple feature sequences that satisfy cross-correlation in the case of any delay. For example, an *m* sequence may be selected as a basic sequence $\{b_i\}$, a Hadamard sequence may be selected as a feature sequence $\{w_i\}$, and different cells may use different row sequences in a Hadamard matrix. It can be known from emulation and verification that, if an *m* sequence with a length of 255 is selected as a local synchronization sequence, assuming that three cells to which feature sequences respectively belong need to be distinguished, first 255 elements in three row sequences of a Hadamard matrix of 256×256 are selected for a feature sequence group of the three cells. It may be verified that more than 600 row sequence combinations can satisfy $corr_1 < 0.2 \times corr_2$ in the case of any delay, and therefore, the foregoing requirement can be satisfied.

In this embodiment, the synchronization signal sending apparatus includes a determining unit and a sending unit. By using this embodiment, a synchronization signal is in a form of a differential signal, and has relatively strong frequency deviation resistance. In addition, synchronization signals from different transmit ends include different feature sequences, and the feature sequences satisfy an orthogonal property in the case of any delay. Therefore, when a receive end performs synchronization by using the synchronization signal, the receive end can eliminate an interfering signal by using the property that the feature sequences of the different transmit ends are orthogonal to each other in the case of any delay, so as to achieve an objective of distinguishing the different transmit ends or distinguishing signals from different cells.

Referring to FIG. 2, FIG. 2 is a schematic diagram of an embodiment of a synchronization signal receiving apparatus according to the present invention.

As shown in FIG. 2, the apparatus includes: a receiving unit 201, a determining unit 202, and a synchronization unit 203.

The receiving unit 201 is configured to receive, by a receive end, a received signal including a synchronization signal.

The receiving unit 201 first receives a synchronization signal $\{r_i\}$ sent by a transmit end, where the synchronization signal $\{r_i\}$ may be represented by $r_1,...,r_{n+1}$. The received signal received by the receiving unit 201 may also include, in addition to the synchronization signal, another signal from a current cell such as a broadcast signal from the current cell, or may include a signal from another cell such as a synchronization signal from another cell. Therefore, the received signal is usually not $\{r_i\}$.

The determining unit 202 is configured to determine a sequence group used to generate the synchronization signal, where the sequence group includes a basic sequence and a feature sequence. Both the basic sequence and the feature sequence are sequences used when the transmit end generates a synchronization sequence.

In different implementation manners, the determining unit 202 may determine the sequence group according to a cell identifier, or may determine the sequence group by using a maximum likelihood search method.

In a possible implementation manner, if the cell identifier of the transmit end can be acquired, the determining unit 202 may include: an identifier determining subunit, configured to determine a cell identifier of a cell in which the transmit end is located; and a sequence group determining subunit, configured to determine the sequence group corresponding to the cell identifier. In this implementation manner, the determining unit 202 may determine the synchronization sequence according to the cell identifier.

In another possible implementation manner, if all candidate sequence combinations are already determined, the sequence group including a basic sequence and a feature sequence may be selected from the candidate sequences

in the maximum likelihood search manner. Each candidate sequence combination includes a candidate feature sequence and a candidate basic sequence. The determining unit may include: a determining subunit, configured to determine all candidate sequence combinations, where each candidate sequence combination includes a candidate feature sequence and a candidate basic sequence; a calculation subunit, configured to separately calculate a correlated peak of each candidate sequence combination and the received signal; and a selection subunit, configured to use, as the sequence group, a candidate sequence combination corresponding to a maximum correlated peak.

The calculation subunit may include: a sliding window operation subunit, configured to perform sliding window operation on the received signal to determine at least one sliding window, where a length of the sliding window is a length of the candidate synchronization sequence plus 1 bit; a correlated value determining subunit, configured to calculate a correlated value of a sliding window signal in each sliding window of the received signal and the candidate sequence combination; and a correlated peak determining subunit, configured to use a maximum correlated value as the correlated peak of the candidate sequence combination and the received signal. The length of the sliding window is a length of the candidate basic sequence plus 1 bit, for example, if the candidate basic sequence has 64 bits, the length of the sliding window is 65 bits. A quantity of sliding windows is determined by the structure, the length, and the like, of the received signal.

The correlated value determining subunit may include: a differential demodulation subunit, configured to perform differential demodulation on the sliding window signal to obtain a first sequence; a feature removing subunit, configured to perform feature removing processing on the first sequence by using the candidate feature sequence, to obtain a second sequence, where the feature removing processing is scalar multiplication or conjugate multiplication, and specifically, if the transmit end uses scalar multiplication during generation of the synchronization sequence, conjugate multiplication is performed on the first sequence and the candidate feature sequence; or if the transmit end uses conjugate multiplication during generation of the synchronization sequence, scalar multiplication is performed on the first sequence and the candidate feature sequence; and a correlated value calculation subunit, configured to calculate a correlated value of the second sequence and the candidate basic sequence.

For differential demodulation processing, if the sliding window signal is represented by $s_1,...,s_{n+1}$, the first sequence $d_1,...,d_n$ obtained after differential demodulation processing is: $d_i = s_{i+1} \times \overline{s_i}, (i = 1,...,n)$. For feature removing processing, if the candidate feature sequence is $w_1,...,w_n$, and the second sequence. is $y_1,...,y_n$, $y_i=d_i \times w_i$ if the transmit end uses conjugate multiplication during generation of the synchronization sequence; or $y_i=d_i \times \overline{w_i}$ if the transmit end uses scalar multiplication during generation of the synchronization sequence.

For calculation of the correlated value, if the basic sequence is $a_1,...,a_n$, the correlated value is

$$corr = \left\| \sum_i y_i \overline{a_i} \right\|^2$$

The synchronization unit 203 is configured to complete synchronization by using the sequence group and the received signal.

A receive end performs synchronization by using the received signal, where the synchronization generally includes symbol timing synchronization and carrier frequency synchronization.

When symbol timing synchronization is performed by using the synchronization signal, the synchronization unit 203 may be configured to use a location of the correlated peak of the sequence group and the received signal as a start location of the synchronization signal in the received signal, so as to complete symbol timing synchronization.

If the receive end already completes symbol timing synchronization in other manners, and only needs to perform carrier frequency synchronization, the synchronization unit 203 includes: an estimation subunit, configured to perform carrier frequency deviation estimation on the third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and a compensation subunit, configured to perform frequency compensation on the received signal by using the carrier frequency deviation estimation value, so as to complete carrier frequency synchronization.

The carrier frequency deviation estimation value may be calculated by using the following formula. If the third sequence obtained by means of differential demodulation processing and feature removing processing is $r_1, r_2, ..., r_n$, and the basic sequence is $lr_1, lr_2, ..., lr_n$, the carrier frequency deviation estimation value is

$$cfo_e = \frac{B}{2\pi} \times angle(\sum_{i=1}^{n} r_i \times \overline{lr_i})$$

where B is signal bandwidth, and angle(x) indicates a phase of x. For frequency compensation, assuming that signals that needs to be compensated are $S_1, S_2, ..., S_n$, and a frequency deviation value that needs to be compensated is $\varepsilon$, signals after compensation are $CS_1, CS_2, ..., CS_n$, where $CS_i = e^{j2\pi i\varepsilon/B} S_i, (i=1,...,n)$. Differential demodulation and feature removing manners are already described in the foregoing embodiments, and are not described in detail herein again.

In this embodiment, the synchronization signal receiving apparatus includes a receiving unit, a determining unit, and a synchronization unit. Impact of another signal except a synchronization signal can be eliminated during a signal synchronization process by using a relationship that is between feature sequences and that is used by different transmit ends, so as to achieve an objective of distinguishing the different transmit ends or distinguishing signals from different cells.

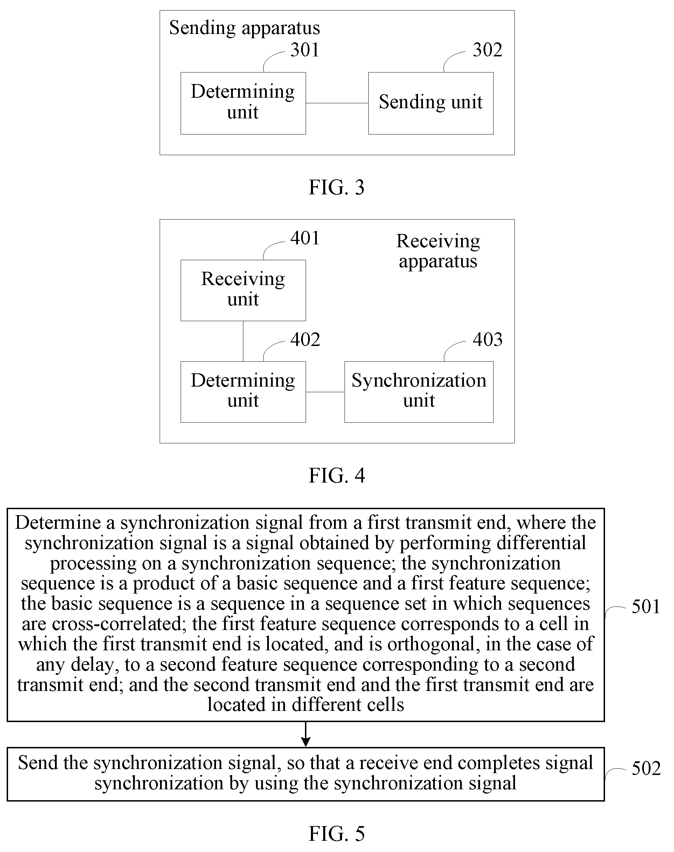

Referring to FIG. 3, FIG. 3 is a schematic diagram of another embodiment of a synchronization signal sending apparatus according to the present invention. Because this embodiment is quite similar to the foregoing embodiment, this embodiment is only briefly described; for details, reference may be made to the foregoing embodiment.

As shown in FIG. 3, the apparatus includes a determining unit 301 and a sending unit 302.

The determining unit 301 is configured to determine a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells.

In different implementation manners, the determining unit 301 may generate a synchronization signal, or may acquire a synchronization signal already generated by the synchronization signal sending apparatus or another device.

As shown in the diagram, in a possible implementation manner, the determining unit 301 includes: an identifier determining subunit, configured to determine a cell identifier of a cell in which the transmit end is located; a synchronization sequence determining subunit, configured to determine the first synchronization sequence corresponding to the cell identifier; and a synchronization signal generating subunit, configured to perform differential processing on the first synchronization sequence to obtain the synchronization signal.

The synchronization sequence determining subunit may be configured to use, as a basic sequence, a pseudo-random sequence or a gold sequence generated by using an initialization seed corresponding to the cell identifier, or use, as a basic sequence, a ZC sequence corresponding to a root sequence number corresponding to the cell identifier.

The sending unit 302 is configured to send the synchronization signal, so that a receive end completes signal synchronization by using the synchronization signal.

Because the synchronization signal sending apparatus in this embodiment is quite similar to the synchronization signal sending apparatus in the foregoing embodiment, descriptions are relatively simple; for details, reference may be made to the foregoing embodiment.

In this embodiment, the synchronization signal sending apparatus includes a determining unit and a sending unit. By using this embodiment, a synchronization signal is in a form of a differential signal, and has relatively strong frequency deviation resistance. In addition, synchronization signals from different transmit ends include different synchronization sequences, and the synchronization sequences are cross-correlated. Therefore, when a receive end performs synchronization by using the synchronization signal, the receive end can eliminate an interfering signal by using the property that the synchronization sequences of the different transmit ends are cross-correlated, so as to achieve an objective of distinguishing the different transmit ends or distinguishing signals from different cells.

Referring to FIG. 4, FIG. 4 is a schematic diagram of another embodiment of a synchronization signal receiving apparatus according to the present invention. Because this embodiment is quite similar to the foregoing embodiment, this embodiment is only briefly described; for details, reference may be made to the foregoing embodiment.

As shown in FIG. 4, the apparatus includes: a receiving unit 401, a determining unit 402, and a synchronization unit 403.

The receiving unit 401 is configured to receive, by a receive end, a received signal including a synchronization signal.

The determining unit 402 is configured to determine a synchronization sequence used to generate the synchronization signal.

The determining unit 402 may determine the synchronization sequence according to a cell identifier, or may determine the synchronization sequence by using a maximum likelihood search method.

In a possible implementation manner, if a cell identifier of a transmit end can be acquired, the determining unit 402 includes: an identifier determining subunit, configured to determine a cell identifier of a cell in which the transmit end is located; and a synchronization sequence determining subunit, configured to determine the synchronization sequence corresponding to the cell identifier. In this implementation manner, a receive end may determine the synchronization sequence according to the cell identifier.

In another possible implementation manner, if all candidate synchronization sequences are already determined, the synchronization sequence may be selected from the candidate synchronization sequences in the maximum likelihood search manner. The determining unit 402 includes: a determining subunit, configured to determine all candidate synchronization sequences; a calculation subunit, configured to separately calculate a correlated peak of each candidate synchronization sequence and the received signal; and a selection subunit, configured to use, as the synchronization sequence, a candidate synchronization sequence corresponding to a maximum correlated peak.

The calculation subunit includes: a sliding window operation subunit, configured to perform sliding window operation on the received signal to determine at least one sliding window, where a length of the sliding window is a length of the candidate synchronization sequence plus 1 bit; a correlated value determining subunit, configured to calculate a correlated value of a sliding window signal in each sliding window of the received signal and the candidate synchronization sequence; and a correlated peak determining subunit, configured to use a maximum correlated value as the correlated peak of the candidate synchronization sequence and the received signal.

The correlated value determining subunit includes: a differential demodulation subunit, configured to perform differential demodulation on the sliding window signal to obtain a first sequence; and a correlated value calculation subunit, configured to calculate a correlated value of the first sequence and the candidate synchronization sequence.

The synchronization unit 403 is configured to complete synchronization by using the synchronization sequence and the received signal.

When symbol timing synchronization is performed by using the synchronization signal, the synchronization unit 403 is specifically configured to use a location of the correlated peak of the synchronization sequence and the received signal as a start location of the synchronization signal in the received signal, so as to complete symbol timing synchronization.

When carrier frequency synchronization is performed by using the synchronization signal, the synchronization unit 403 includes: an estimation subunit, configured to perform carrier frequency deviation estimation on a second sequence by using the synchronization sequence, to obtain a carrier frequency deviation estimation value, where the second sequence is obtained by performing differential demodulation on the synchronization signal; and a compensation subunit, configured to perform frequency compensation on the received signal by using the carrier frequency deviation estimation value, so as to complete carrier frequency synchronization.

Because the synchronization signal receiving apparatus in this embodiment is similar to the synchronization signal receiving apparatus in the foregoing embodiment, descriptions are relatively simple in this embodiment; for specific content, reference may be made to the foregoing embodiment.

In this embodiment, the synchronization signal receiving apparatus includes a receiving unit, a determining unit, and a synchronization unit. Impact of another signal except a synchronization signal can be eliminated during a signal synchronization process by using cross-correlation that is between synchronization sequences and that is used by different transmit ends, so as to achieve an objective of distinguishing the different transmit ends or distinguishing signals from different cells.

Referring to FIG. 5, FIG. 5 is a flowchart of an embodiment of a signal generation method according to the present invention. Because this embodiment is quite similar to the foregoing embodiments, this embodiment is only briefly described; for details, reference may be made to the foregoing embodiments. As shown in FIG. 5, this embodiment includes the following steps:

Step 501: Determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell in which the first transmit end is located, and is orthogonal, in the case of any delay, to a second feature sequence corresponding to a second transmit end; and the second transmit end and the first transmit end are located in different cells.

During determining of the synchronization signal, the first transmit end may generate a synchronization signal, or may directly acquire a synchronization signal that has already been generated.

During generation of the synchronization signal, a cell identifier of the cell in which the first transmit end is located may be first determined, and then, the basic sequence corresponding to the cell identifier and the first feature sequence corresponding to the cell identifier may be determined; scalar multiplication or conjugate multiplication may be performed on the basic sequence and the first feature sequence, so as to obtain the synchronization sequence; and differential processing may be performed on the synchronization sequence to obtain the synchronization signal. If the first feature sequence or the basic sequence is a sequence that is in a form of 0 and 1, the first feature sequence or the basic sequence needs to be processed, for example, adjustment is performed to convert the basic sequence or the first feature sequence to a sequence that is not in a form of 0 and 1, so as to facilitate execution of scalar multiplication or conjugate multiplication.

The first transmit end may determine the cell identifier according to the cell in which the first transmit end is located, for example, a base station may determine, according to a cell in which the base station is located, a cell identifier of the cell.

During determining of the basic sequence, a pseudo-random sequence or a gold sequence generated by using an initialization seed corresponding to the cell identifier may be used as the basic sequence, or a ZC sequence corresponding to a root sequence number corresponding to the cell identifier may be used as the basic sequence. It should be noted herein that, the first transmit end and the second transmit end may use a same basic sequence, or may use different basic sequences. When different basic sequences are used, the basic sequences may be different sequences in a sequence set in which sequences are cross-correlated.

Step 502: Send the synchronization signal, so that a receive end completes signal synchronization by using the synchronization signal.

After the synchronization signal is determined, the first transmit end may directly send the synchronization signal, or may send the synchronization signal after further processing is performed on the synchronization signal. For example, the synchronization signal may be sent after processing such as sampling and resource mapping, and a specific process is not described in detail herein.

When a synchronization signal is sent by using this embodiment of the present invention, the synchronization signal is a differential signal, and has a sound frequency deviation resistance property. In addition, because a synchronization sequence is a product of a basic sequence and a feature sequence, when a receive end completes synchronization by using a received signal, the receive end can eliminate, by using a relationship that is between synchronization sequences and that is used by different transmit ends, interference from a signal sent by another transmit end, so as to achieve an objective of distinguishing the different transmit ends or distinguishing signals from different cells.

Corresponding to this embodiment of the synchronization signal sending method in the present invention, an embodiment of a synchronization signal receiving method is further provided in the present invention.

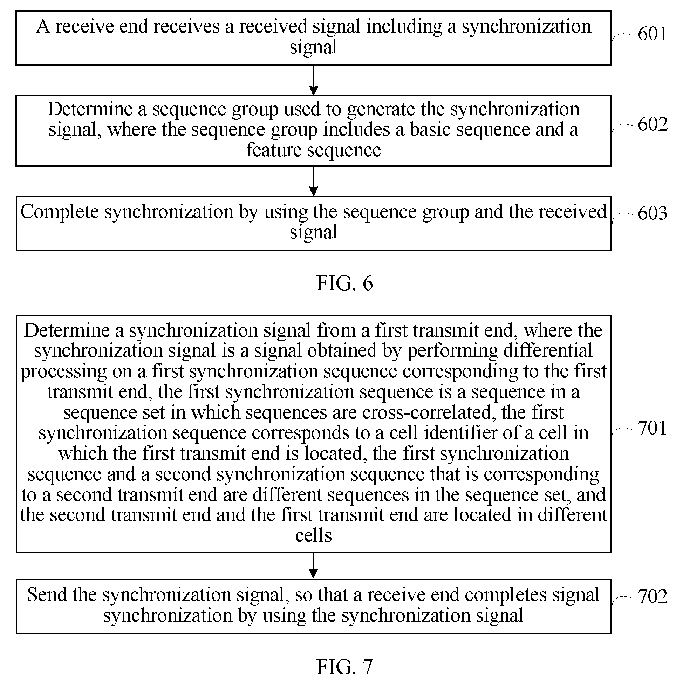

Referring to FIG. 6, FIG. 6 is a flowchart of an embodiment of a synchronization signal receiving method according to the present invention. Because this embodiment is quite similar to the foregoing embodiments, this embodiment is only briefly described; for details, reference may be made to the foregoing embodiments. As shown in FIG. 6, this embodiment includes the following steps:

Step 601: A receive end receives a received signal including a synchronization signal.

Step 602: Determine a sequence group used to generate the synchronization signal, where the sequence group includes a basic sequence and a feature sequence.

Because a basic sequence and a feature sequence generally correspond to a cell identifier, and are generally sequences that are set according to a preset rule, there are multiple manners of determining the sequence group used to generate the synchronization signal, where the sequence group includes a basic sequence and a feature sequence.

In a possible implementation manner, the receive end may first determine a cell identifier of the transmit end, and then determine a basic sequence and a feature sequence according to the cell identifier, so as to determine the sequence group.

In a possible implementation manner, if all candidate sequence combinations are already determined, the sequence group including a basic sequence and a feature sequence may be selected from the candidate sequences in a maximum likelihood search manner. Each candidate sequence combination includes a candidate feature sequence and a candidate basic sequence.

Specifically, when the maximum likelihood search manner is used, a correlated peak of each candidate sequence combination and the received signal may be separately calculated; and a candidate sequence combination corresponding to a maximum correlated peak may be used as the sequence group. A candidate basic sequence and a candidate feature sequence in the sequence group are the feature sequence and the basic sequence.

The correlated peak of each candidate sequence combination and the received signal may be calculated in the following manner: performing sliding window operation on the received signal to determine at least one sliding window, where a length of the sliding window is a length of the candidate basic sequence plus 1 bit, for example, if the candidate basic sequence has 64 bits, the length of the sliding window is 65 bits, and a quantity of sliding windows is determined by the structure, the length, and the like, of the received signal; calculating a correlated value of a sliding window signal in each sliding window of the received signal and the candidate sequence combination; and using a maximum correlated value as the correlated peak of the candidate sequence combination and the received signal.

The correlated value of a sliding window signal in a sliding window and the candidate sequence combination may be calculated in the following manner: performing differential demodulation on the sliding window signal to obtain a first sequence; performing feature removing processing on the first sequence by using the candidate feature sequence, to obtain a second sequence, where the feature removing processing is scalar multiplication or conjugate multiplication, and specifically, if the transmit end uses scalar multiplication during generation of the synchronization sequence, conjugate multiplication is performed on the first sequence and the candidate feature sequence; and if the transmit end uses conjugate multiplication during generation of the synchronization sequence, scalar multiplication is performed on the first sequence and the candidate feature sequence; and calculating a correlated value of the second sequence and the candidate basic sequence after the second sequence is generated.

For a process of determining the sequence group in the maximum likelihood search manner, reference may be made to the foregoing embodiments, and details are not described herein again.

Step 603: Complete synchronization by using the sequence group and the received signal.

After both the feature sequence and the basic sequence are determined, the receive end may perform synchronization processing by using the basic sequence and the feature sequence. When the receive end performs synchronization by using the received signal, the receive end needs to complete symbol timing synchronization and carrier frequency synchronization.

For symbol timing synchronization, after the feature sequence and the basic sequence are determined, a location of the correlated peak of the sequence group and the received signal is a start location of the synchronization signal in the received signal, so that symbol timing synchronization can be completed.

If the basic sequence and the feature sequence are acquired according to the cell identifier, the correlated peak of the sequence group and the received signal may be calculated, and the location of the correlated peak may be used as the start location of the synchronization signal in the received signal. During calculation of the correlated peak, sliding window operation is performed on the received signal to determine at least one sliding window; a correlated value of the sliding window signal in each sliding window of the received signal and the sequence group is calculated; and a maximum correlated value is used as the correlated peak of the sequence group and the received signal. The method for determining a sliding window and the method for calculating a correlated value are already described in the foregoing embodiments, and are not described in detail herein again.

If the basic sequence and the feature sequence are acquired in the maximum likelihood search manner, a maximum correlated peak obtained during a maximum likelihood search process may be directly determined, and a location of a sliding window signal corresponding to the maximum correlated peak may be used as the start location of the synchronization signal.

For carrier frequency synchronization, carrier frequency deviation estimation may be performed on a third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and frequency compensation is performed on the received signal by using the carrier frequency deviation estimation value, so as to complete carrier frequency synchronization.

By using this embodiment, when a receive end completes synchronization by using a received signal, the receive end can eliminate, by using a relationship that is between feature sequences and that is used by different transmit ends, interference from a signal sent by another transmit end, so as to achieve an objective of distinguishing the different transmit ends or distinguishing signals from different cells.

Referring to FIG. 7, FIG. 7 is a flowchart of another embodiment of a signal generation method according to the present invention. Because this embodiment is quite similar to the foregoing embodiments, this embodiment is only briefly described; for details, reference may be made to the foregoing embodiments.

Step 701: Determine a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells.

During determining of the synchronization signal, the first transmit end may generate a synchronization signal, or may directly acquire a synchronization signal that has already been generated.

During generation of the synchronization signal, the cell identifier of the cell in which the first transmit end is located may be first determined, the first synchronization sequence corresponding to the cell identifier may be determined, and then, differential processing may be performed on the first synchronization sequence to obtain the synchronization signal. The first synchronization sequence is a pseudo-random sequence, a gold sequence, or a ZC sequence.

During determining of the synchronization sequence, a pseudo-random sequence or a gold sequence generated by using an initialization seed corresponding to the cell identifier may be used as the synchronization sequence, or a ZC sequence corresponding to a root sequence number corresponding to the cell identifier may be used as the synchronization sequence. It should be noted herein that, the first synchronization sequence and the second synchronization sequence are different sequences in a sequence set in which sequences are cross-correlated.

Step 702: Send the synchronization signal, so that a receive end completes signal synchronization by using the synchronization signal.

After the synchronization signal is generated, the first transmit end may directly send the synchronization signal, or may send the synchronization signal after further processing is performed on the synchronization signal, and a specific process is not described in detail herein.

When a synchronization signal is sent by using this embodiment, the synchronization signal is a differential signal, and has a sound frequency deviation resistance property. In addition, because different transmit ends that need to be distinguished use cross-correlated synchronization sequences, when a receive end completes synchronization by using a received signal, the receive end can eliminate, by using a property of a synchronization sequence, interference from a signal sent by another transmit end, so as to achieve an objective of distinguishing the different transmit ends or distinguishing signals from different cells.

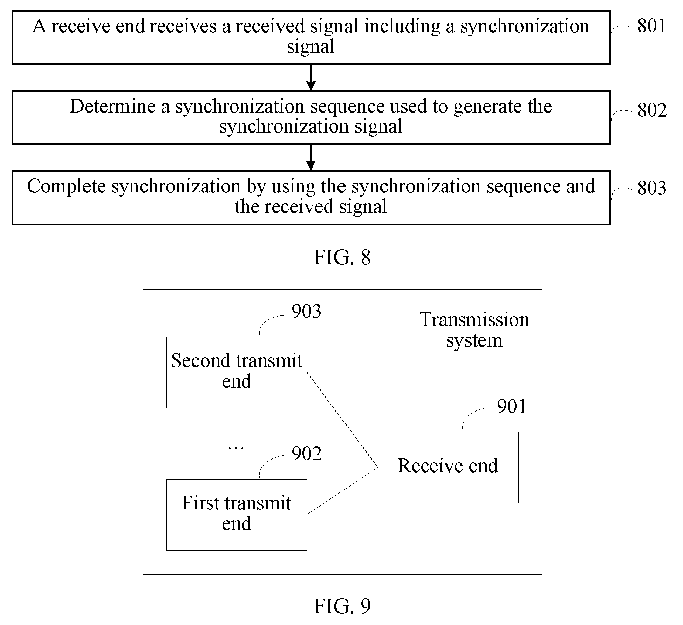

Referring to FIG. 8, FIG. 8 is a flowchart of another embodiment of a synchronization signal receiving method according to the present invention. Because this embodiment is quite similar to the foregoing embodiments, this embodiment is only briefly described; for details, reference may be made to the foregoing embodiments.

Step 801: A receive end receives a received signal including a synchronization signal.

Step 802: Determine a synchronization sequence used to generate the synchronization signal.

Because a synchronization sequence generally corresponds to a cell identifier, and is a sequence that is set according to a preset rule, there are multiple manners of determining the synchronization sequence used to generate the synchronization signal.

In a possible implementation manner, the receive end may first determine a cell identifier of a cell in which the transmit end is located, and then determine the synchronization sequence corresponding to the cell identifier. For example, if an initialization seed corresponding to the cell identifier and a generation rule are already known, the synchronization sequence may be directly generated, or a synchronization sequence sent by the transmit end may be acquired in a specified manner.

In a possible implementation manner, if all candidate synchronization sequences are already determined, the synchronization sequence may be determined in a maximum likelihood search manner.

Specifically, when the maximum likelihood search manner is used, a correlated peak of each candidate synchronization sequence and the received signal may be separately calculated; and a candidate synchronization sequence corresponding to a maximum correlated peak may be used as the synchronization sequence. The synchronization sequence includes synchronization sequences used by all transmit ends.

A correlated peak of a candidate synchronization sequence and the received signal may be calculated in the following manner:

performing sliding window operation on the received signal to determine at least one sliding window, where a length of the sliding window is a length of the candidate synchronization sequence plus 1 bit; calculating a correlated value of a sliding window signal in each sliding window of the received signal and the candidate synchronization sequence; and using a maximum correlated value as the correlated peak of the candidate synchronization sequence and the received signal.

The correlated value of the sliding window signal in a sliding window and the candidate synchronization sequence may be calculated in the following manner:

performing differential demodulation on the sliding window signal to obtain a first sequence; and calculating a correlated value of the first sequence and the candidate synchronization sequence. For a specific process of calculating the correlated value, reference may be made to the foregoing embodiments, and details are not described herein again.

Step 803: Complete synchronization by using the synchronization sequence and the received signal.

After the synchronization sequence is determined, synchronization processing may be performed on the synchronization signal by using the synchronization sequence.

For symbol timing synchronization, after the synchronization sequence is determined, a location of the correlated peak of the synchronization sequence and the received signal may be used as a start location of the synchronization signal in the received signal, so as to complete symbol timing synchronization.

For carrier frequency synchronization, carrier frequency deviation estimation may be first performed on a second sequence by using the synchronization sequence, to obtain a carrier frequency deviation estimation value, where the second sequence is obtained by performing differential demodulation on the synchronization signal; and frequency compensation may be performed on the received signal by using the carrier frequency deviation estimation value, so as to complete carrier frequency synchronization.

For a specific process of determining the correlated peak and the carrier frequency deviation estimation value, reference may be made to the foregoing embodiments, and details are not described herein again.

By using this embodiment, when a receive end completes synchronization by using a received signal, the receive end can eliminate, by using a relationship that is between synchronization sequences and that is used by different transmit ends, interference from a signal sent by another transmit end, so as to achieve an objective of distinguishing the different transmit ends or distinguishing signals from different cells.

Referring to FIG. 9, FIG. 9 is a schematic diagram of an embodiment of a signal transmission system according to the present invention.

As shown in FIG. 9, the system includes a transmit end and a receive end 901. The transmit end includes at least a first transmit end 902 and a second transmit end 903.

The transmit end is configured to determine a synchronization signal from the first transmit end 902, where the synchronization signal is a signal obtained by performing differential processing on a synchronization sequence, the synchronization sequence is a product of a basic sequence and a first feature sequence; the basic sequence is a sequence in a sequence set in which sequences are cross-correlated; the first feature sequence corresponds to a cell identifier of a cell in which the first transmit end 902 is located, and is orthogonal, in the case of any delay, to a second feature sequence corresponding to the second transmit end 903; and the second transmit end 903 and the first transmit end 902 are located in different cells; and send the synchronization signal, so that the receive end 901 completes signal synchronization by using the synchronization signal. The basic sequence may be a pseudo-random sequence, a gold sequence, or a ZC sequence; and the first feature sequence may be a Hadamard sequence or a Walsh sequence.

The receive end 901 is configured to receive a received signal including a synchronization signal; determine a sequence group used to generate the synchronization signal, where the sequence group includes a basic sequence and a feature sequence; and complete synchronization by using the sequence group and the received signal.

In another possible implementation manner, the basic sequence is a pseudo-random sequence, a gold sequence, or a ZC sequence; and the first feature sequence is a Hadamard sequence or a Walsh sequence.

In another possible implementation manner, the first transmit end 902 is further configured to determine the cell identifier of the cell in which the first transmit end is located; determine the basic sequence corresponding to the cell identifier; determine the first feature sequence corresponding to the cell identifier; perform scalar multiplication or conjugate multiplication on the basic sequence and the first feature sequence, so as to obtain the synchronization sequence; and perform differential processing on the synchronization sequence to obtain the synchronization signal.

In another possible implementation manner, the first transmit end 902 is further configured to use, as the basic sequence, a pseudo-random sequence or a gold sequence generated by using an initialization seed corresponding to the cell identifier, or use, as the basic sequence, a ZC sequence corresponding to a root sequence number corresponding to the cell identifier.

In another possible implementation manner, the first transmit end 902 is further configured to determine that a Hadamard sequence or a Walsh sequence corresponding to the cell identifier is the first feature sequence.

In another possible implementation manner, the receive end 901 is further configured to determine the cell identifier of the cell in which the transmit end is located, and determine the sequence group corresponding to the cell identifier.

In another possible implementation manner, the receive end 901 is further configured to determine all candidate sequence combinations, where each candidate sequence combination includes a candidate feature sequence and a candidate basic sequence; separately calculate a correlated peak of each candidate sequence combination and the received signal; and use, as the sequence group, a candidate sequence combination corresponding to a maximum correlated peak.

In another possible implementation manner, the receive end 901 is further configured to perform sliding window operation on the received signal to determine at least one sliding window, where a length of the sliding window is a length of the candidate synchronization sequence plus 1 bit; calculate a correlated value of a sliding window signal in each sliding window of the received signal and the candidate sequence combination; and use a maximum correlated value as the correlated peak of the candidate sequence combination and the received signal.

In another possible implementation manner, the receive end 901 is further configured to perform differential demodulation on the sliding window signal to obtain a first sequence; perform feature removing processing on the first sequence by using the candidate feature sequence, to obtain a second sequence, where the feature removing processing is scalar multiplication or conjugate multiplication; and calculate a correlated value of the second sequence and the candidate basic sequence.

In another possible implementation manner, the receive end 901 is further configured to use a location of the correlated peak of the sequence group and the received signal as a start location of the synchronization signal in the received signal, so as to complete symbol timing synchronization.

In another possible implementation manner, the receive end 901 is further configured to perform carrier frequency deviation estimation on the third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and perform frequency compensation on the received signal by using the carrier frequency deviation estimation value, so as to complete carrier frequency synchronization.

By using this embodiment, a synchronization signal is a differential signal, and has a relatively sound frequency deviation resistance property. In addition, because feature sequences used by different transmit ends satisfy an orthogonal property in the case of any delay, a receive end can distinguish the different transmit ends by using this property of the feature sequences, so as to achieve an objective of distinguishing the different transmit ends or distinguishing signals from different cells.

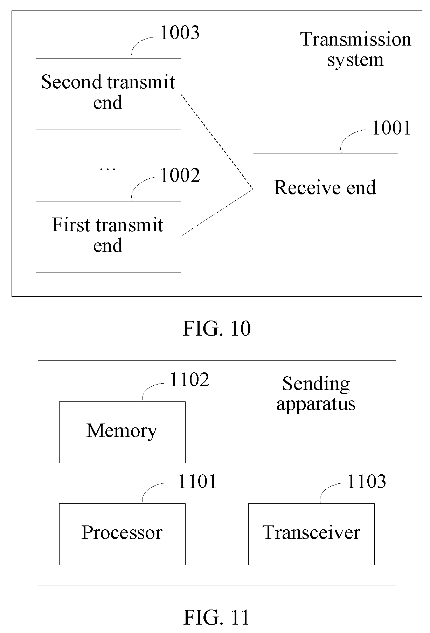

Referring to FIG. 10, FIG. 10 is a schematic diagram of another embodiment of a signal transmission system according to the present invention.

As shown in FIG. 10, the system includes a transmit end and a receive end 1001. The transmit end includes at least a first transmit end 1002 and a second transmit end 1003.

The transmit end is configured to determine a synchronization signal from the first transmit end 1002, where the synchronization signal is a signal obtained by performing differential processing on a first synchronization sequence corresponding to the first transmit end 1002, the first synchronization sequence is a sequence in a sequence set in which sequences are cross-correlated, the first synchronization sequence corresponds to a cell identifier of a cell in which the first transmit end 1002 is located, the first synchronization sequence and a second synchronization sequence that is corresponding to the second transmit end 1003 are different sequences in the sequence set, and the second transmit end 1003 and the first transmit end 1002 are located in different cells; and send the synchronization signal, so that the receive end 1001 completes signal synchronization by using the synchronization signal.

The receive end 1001 is configured to receive a received signal including a synchronization signal; determine a synchronization sequence used to generate the synchronization signal; and complete synchronization by using the synchronization sequence and the received signal.

In another possible implementation manner, the transmit end 1001 is further configured to determine a synchronization signal from the first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to the second transmit end are different sequences in the sequence set, and the second transmit end and the first transmit end are located in different cells; and send the synchronization signal, so that the receive end completes signal synchronization by using the synchronization signal.

In another possible implementation manner, the receive end 1001 is further configured to determine the cell identifier of the cell in which the transmit end is located, determine the first synchronization sequence corresponding to the cell identifier, and perform differential processing on the first synchronization sequence to obtain the synchronization signal. The first synchronization sequence is a pseudo-random sequence, a gold sequence, or a ZC sequence.

In another possible implementation manner, the receive end 1001 is further configured to determine the cell identifier of the cell in which the transmit end is located, and determine the synchronization sequence corresponding to the cell identifier.

In another possible implementation manner, the receive end 1001 is further configured to determine all candidate synchronization sequences; separately calculate a correlated peak of each candidate synchronization sequence and the received signal; and use, as the synchronization sequence, a candidate synchronization sequence corresponding to a maximum correlated peak.

In another possible implementation manner, the receive end 1001 is further configured to perform sliding window operation on the received signal to determine at least one sliding window, where a length of the sliding window is a length of the candidate synchronization sequence plus 1 bit; calculate a correlated value of a sliding window signal in each sliding window of the received signal and the candidate synchronization sequence; and use a maximum correlated value as the correlated peak of the candidate synchronization sequence and the received signal.

In another possible implementation manner, the receive end 1001 is further configured to perform differential demodulation on the sliding window signal to obtain a first sequence, and calculate a correlated value of the first sequence and the candidate synchronization sequence.

In another possible implementation manner, the receive end 1001 is further configured to use a location of the correlated peak of the synchronization sequence and the received signal as a start location of the synchronization signal in the received signal, so as to complete symbol timing synchronization.

In another possible implementation manner, the receive end 1001 is further configured to perform carrier frequency deviation estimation on a second sequence by using the synchronization sequence, to obtain a carrier frequency deviation estimation value, where the second sequence is obtained by performing differential demodulation on the synchronization signal; and perform frequency compensation on the received signal by using the carrier frequency deviation estimation value, so as to complete carrier frequency synchronization.

By using this embodiment, a synchronization signal is a differential signal, and has a relatively sound frequency deviation resistance property. In addition, because synchronization sequences used by different transmit ends are cross-correlated, a receive end can distinguish the different transmit ends by using this property of the synchronization sequences, so as to achieve an objective of distinguishing the different transmit ends or distinguishing signals from different cells.

Referring to FIG. 11, FIG. 11 is a schematic diagram of another embodiment of a signal sending apparatus according to the present invention.

As shown in FIG. 11, the apparatus includes modules such as a processor 1101, a memory 1102, and a transceiver 1103, where the modules are interconnected.

The memory 1102 is configured to store a program. Specifically, the program may include program code, where the program code includes a computer operation instruction. The memory 1102 may include a random access memory 1102 (random access memory, RAM for short) memory 1102, and may further include a non-volatile memory 1102 (non-volatile memory), for example, at least one magnetic disk memory 1102.

The processor 1101 may execute the program code, and is configured to determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells.

The transceiver 1103 is configured to send the synchronization signal, so that a receive end completes signal synchronization by using the synchronization signal.

In another possible implementation manner, the processor 1101 is further configured to determine the cell identifier of the cell in which the first transmit end is located; determine the basic sequence corresponding to the cell identifier; determine the first feature sequence corresponding to the cell identifier; perform scalar multiplication or conjugate multiplication on the basic sequence and the first feature sequence, so as to obtain the synchronization sequence; and perform differential processing on the synchronization sequence to obtain the synchronization signal.

In another possible implementation manner, the processor 1101 is further configured to use, as the basic sequence, a pseudo-random sequence or a gold sequence generated by using an initialization seed corresponding to the cell identifier, or use, as the basic sequence, a ZC sequence corresponding to a root sequence number corresponding to the cell identifier.

In another possible implementation manner, the processor 1101 is further configured to determine that a Hadamard sequence or a Walsh sequence corresponding to the cell identifier is the first feature sequence.

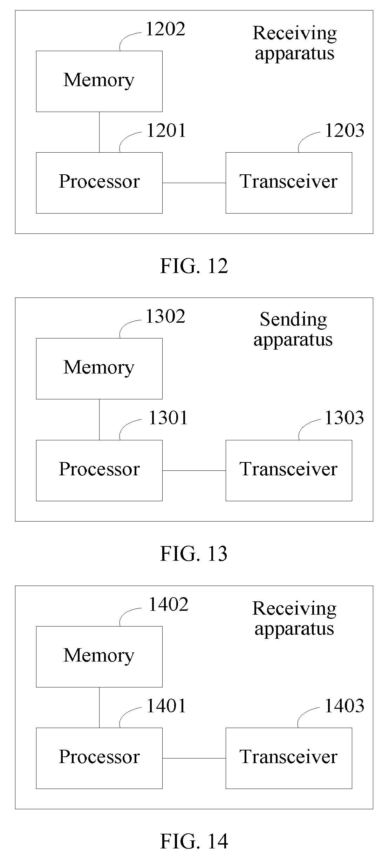

Referring to FIG. 12, FIG. 12 is a schematic diagram of another embodiment of a signal receiving apparatus according to the present invention.

As shown in FIG. 12, the apparatus includes modules such as a processor 1201, a memory 1202, and a transceiver 1203, where the modules are interconnected.

The memory 1202 is configured to store a program. Specifically, the program may include program code, where the program code includes a computer operation instruction. The memory 1202 may include a random access memory 1202 (random access memory, RAM for short) memory 1202, and may further include a non-volatile memory 1202 (non-volatile memory), for example, at least one magnetic disk memory 1202.

The transceiver 1203 is configured to receive, by a receive end, a received signal including a synchronization signal.

The processor 1201 may execute the program code, and is configured to determine a sequence group used to generate the synchronization signal, where the sequence group includes a basic sequence and a feature sequence; and complete synchronization by using the sequence group and the received signal.

In another possible implementation manner, the processor 1201 is further configured to determine a cell identifier of a cell in which the transmit end is located, and determine the sequence group corresponding to the cell identifier.

In another possible implementation manner, the processor 1201 is further configured to determine all candidate sequence combinations, where each candidate sequence combination includes a candidate feature sequence and a candidate basic sequence; separately calculate a correlated peak of each candidate sequence combination and the received signal; and use, as the sequence group, a candidate sequence combination corresponding to a maximum correlated peak.

In another possible implementation manner, the processor 1201 is further configured to perform sliding window operation on the received signal to determine at least one sliding window, where a length of the sliding window is a length of the candidate synchronization sequence plus 1 bit; calculate a correlated value of a sliding window signal in each sliding window of the received signal and the candidate sequence combination; and use a maximum correlated value as the correlated peak of the candidate sequence combination and the received signal.

In another possible implementation manner, the processor 1201 is further configured to perform differential demodulation on the sliding window signal to obtain a first sequence; perform feature removing processing on the first sequence by using the candidate feature sequence, to obtain a second sequence, where the feature removing processing is scalar multiplication or conjugate multiplication; and calculate a correlated value of the second sequence and the candidate basic sequence.

In another possible implementation manner, the processor 1201 is further configured to use a location of the correlated peak of the sequence group and the received signal as a start location of the synchronization signal in the received signal, so as to complete symbol timing synchronization.

In another possible implementation manner, the processor 1201 is further configured to perform carrier frequency deviation estimation on the third sequence by using the basic sequence, to obtain a carrier frequency deviation estimation value, where the third sequence is a sequence obtained by performing feature removing processing on the synchronization sequence by using the feature sequence, and the synchronization sequence is obtained by performing differential demodulation on the synchronization signal; and perform frequency compensation on the received signal by using the carrier frequency deviation estimation value, so as to complete carrier frequency synchronization.

Referring to FIG. 13, FIG. 13 is a schematic diagram of another embodiment of a signal sending apparatus according to the present invention.

As shown in FIG. 13, the apparatus includes modules such as a processor 1301, a memory 1302, and a transceiver 1303, where the modules are interconnected.

The memory 1302 is configured to store a program. Specifically, the program may include program code, where the program code includes a computer operation instruction. The memory 1302 may include a random access memory 1302 (random access memory, RAM for short) memory 1302, and may further include a non-volatile memory 1302 (non-volatile memory), for example, at least one magnetic disk memory 1302.

The processor 1301 may execute the program code, and is configured to determine a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells.

In another possible implementation manner, the processor 1301 is further configured to determine the cell identifier of the cell in which the transmit end is located.

In another possible implementation manner, the processor 1301 is further configured to determine the first synchronization sequence corresponding to the cell identifier.

In another possible implementation manner, the processor 1301 is further configured to perform differential processing on the first synchronization sequence to obtain the synchronization signal.

The transceiver 1303 is configured to send the synchronization signal, so that a receive end completes signal synchronization by using the synchronization signal.

Referring to FIG. 14, FIG. 14 is a schematic diagram of another embodiment of a signal receiving apparatus according to the present invention.

As shown in FIG. 14, the apparatus includes modules such as a processor 1401, a memory 1402, and a transceiver 1403, where the modules are interconnected.

The memory 1402 is configured to store a program. Specifically, the program may include program code, where the program code includes a computer operation instruction. The memory 1402 may include a random access memory 1402 (random access memory, RAM for short) memory 1402, and may further include a non-volatile memory 1402 (non-volatile memory), for example, at least one magnetic disk memory 1402.

The transceiver 1403 is configured to receive, by a receive end, a received signal including a synchronization signal.

The processor 1401 may execute the program code, and is configured to determine a synchronization sequence used to generate the synchronization signal, and complete synchronization by using the synchronization sequence and the received signal.

In another possible implementation manner, the processor 1401 is further configured to determine a cell identifier of a cell in which the transmit end is located, and determine the synchronization sequence corresponding to the cell identifier.

In another possible implementation manner, the processor 1401 is further configured to determine all candidate synchronization sequences; separately calculate a correlated peak of each candidate synchronization sequence and the received signal; and use, as the synchronization sequence, a candidate synchronization sequence corresponding to a maximum correlated peak.

In another possible implementation manner, the processor 1401 is further configured to perform sliding window operation on the received signal to determine at least one sliding window, where a length of the sliding window is a length of the candidate synchronization sequence plus 1 bit; calculate a correlated value of a sliding window signal in each sliding window of the received signal and the candidate synchronization sequence; and use a maximum correlated value as the correlated peak of the candidate synchronization sequence and the received signal.

In another possible implementation manner, the processor 1401 is further configured to perform differential demodulation on the sliding window signal to obtain a first sequence, and calculate a correlated value of the first sequence and the candidate synchronization sequence.

In another possible implementation manner, the processor 1401 is further configured to use a location of the correlated peak of the synchronization sequence and the received signal as a start location of the synchronization signal in the received signal, so as to complete symbol timing synchronization.

In another possible implementation manner, the processor 1401 is further configured to perform carrier frequency deviation estimation on a second sequence by using the synchronization sequence, to obtain a carrier frequency deviation estimation value, where the second sequence is obtained by performing differential demodulation on the synchronization signal; and perform frequency compensation on the received signal by using the carrier frequency deviation estimation value, so as to complete carrier frequency synchronization.

By using this embodiment, when a receive end completes synchronization by using a received signal, the receive end can eliminate, by using cross-correlation between basic sequences, interference from another signal sent by a current transmit end and a signal sent by another transmit end.

In specific implementation, the present invention further provides a computer storage medium, where the computer storage medium may store a program. When the program is executed, some or all steps in the embodiments of the call method provided in the present invention may be included. The foregoing storage medium may be a magnetic disk, an optical disc, a read-only memory (Read-Only Memory, ROM), a random access memory (Random Access Memory, RAM), or the like.

A person skilled in the art may clearly understand that, the technologies in the embodiments of the present invention may be implemented by software in addition to a necessary general hardware platform. Based on such an understanding, the technical solutions in the embodiments of the present invention essentially, or the part contributing to the prior art may be implemented in a form of a software product. The computer software product may be stored in a storage medium, such as an ROM/RAM, a magnetic disk, or an optical disc, and includes several instructions for instructing a computer transmit-end device (which may be a personal computer, a server, or a network transmit-end device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, apparatus, server, and system embodiments are basically similar to method embodiments, and therefore, descriptions are relatively simple; for related parts, reference may be made to partial descriptions in the method embodiments.

The foregoing descriptions are implementation manners of the present invention, but are not intended to limit the protection scope of the present invention. Any modification, equivalent replacement, and improvement made without departing from the spirit and principle of the present invention shall fall within the protection scope of the present invention.

## Claims

1. A synchronization signal sending apparatus, comprising:

   a determining unit, configured to determine a synchronization signal from a first transmit end, wherein the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells; and

a sending unit, configured to send the synchronization signal, so that a receive end completes signal synchronization by using the synchronization signal.

2. The apparatus according to claim 1, wherein the determining unit is specifically configured to determine the synchronization signal from the first transmit end, wherein the synchronization signal is the signal obtained by performing differential processing on the synchronization sequence; the synchronization sequence is a product of the basic sequence and the first feature sequence; the basic sequence is the sequence in a sequence set in which sequences are cross-correlated; the first feature sequence corresponds to the cell identifier of the cell in which the first transmit end is located, and is orthogonal, in the case of any delay, to the second feature sequence corresponding to the second transmit end; the second transmit end and the first transmit end are located in different cells; the basic sequence is a pseudo-random sequence, a gold sequence, or a ZC sequence; and the first feature sequence is a Hadamard sequence or a Walsh sequence.

3. The apparatus according to claim 1, wherein the determining unit comprises:

an identifier determining subunit, configured to determine the cell identifier of the cell in which the first transmit end is located;
a basic sequence determining subunit, configured to determine the basic sequence corresponding to the cell identifier;
a feature sequence determining subunit, configured to determine the first feature sequence corresponding to the cell identifier;
a synchronization sequence generating subunit, configured to perform scalar multiplication or conjugate multiplication on the basic sequence and the first feature sequence, so as to obtain the synchronization sequence; and
a synchronization signal generating subunit, configured to perform differential processing on the synchronization sequence to obtain the synchronization signal.

4. The apparatus according to claim 3, wherein the basic sequence determining subunit is specifically configured to use, as the basic sequence, a pseudo-random sequence or a gold sequence generated by using an initialization seed corresponding to the cell identifier, or use, as the basic sequence, a ZC sequence corresponding to a root sequence number corresponding to the cell identifier.

5. The apparatus according to claim 3 or 4, wherein the feature sequence determining subunit is specifically configured to determine that a Hadamard sequence or a Walsh sequence corresponding to the cell identifier is the first feature sequence.

6. A synchronization signal receiving apparatus, comprising:

a receiving unit, configured to receive, by a receive end, a received signal comprising a synchronization signal;
a determining unit, configured to determine a sequence group used to generate the synchronization signal, wherein the sequence group comprises a basic sequence and a feature sequence; and
a synchronization unit, configured to complete synchronization by using the sequence group and the received signal.

7. The apparatus according to claim 6, wherein the determining unit comprises:

an identifier determining subunit, configured to determine a cell identifier of a cell in which the transmit end is located; and
a sequence group determining subunit, configured to determine the sequence group corresponding to the cell identifier.

8. The apparatus according to claim 6, wherein the determining unit comprises:

a determining subunit, configured to determine all candidate sequence combinations, wherein each candidate sequence combination comprises a candidate feature sequence and a candidate basic sequence;
a calculation subunit, configured to separately calculate a correlated peak of each candidate sequence combination and the received signal; and
a selection subunit, configured to use, as the sequence group, a candidate sequence combination corresponding to a maximum correlated peak.

9. The apparatus according to claim 8, wherein the calculation subunit comprises:

a sliding window operation subunit, configured to perform sliding window operation on the received signal to determine at least one sliding window, wherein a length of the sliding window is a length of the candidate synchronization sequence plus 1 bit;
a correlated value determining subunit, configured to calculate a correlated value of a sliding window signal in each sliding window of the received signal and the candidate sequence combination; and

a correlated peak determining subunit, configured to use a maximum correlated value as the correlated peak of the candidate sequence combination and the received signal.

10. The apparatus according to claim 9, wherein the correlated value determining subunit comprises:

a differential demodulation subunit, configured to perform differential demodulation on the sliding window signal to obtain a first sequence;
a feature removing subunit, configured to perform feature removing processing on the first sequence by using the candidate feature sequence, to obtain a second sequence, wherein the feature removing processing is scalar multiplication or conjugate multiplication; and
a correlated value calculation subunit, configured to calculate a correlated value of the second sequence and the candidate basic sequence.

11. The apparatus according to any one of claims 6 to 10, wherein
the synchronization unit is specifically configured to use a location of the correlated peak of the sequence group and the received signal as a start location of the synchronization signal in the received signal, so as to complete symbol timing synchronization.

12. The apparatus according to any one of claims 6 to 10, wherein the synchronization unit comprises:

an estimation subunit, configured to perform carrier frequency deviation estimation on the third sequence by using the basic sequence, to obtain a carrier frequency deviation estimation value, wherein the third sequence is a sequence obtained by performing feature removing processing on the synchronization sequence by using the feature sequence, and the synchronization sequence is obtained by performing differential demodulation on the synchronization signal; and
a compensation subunit, configured to perform frequency compensation on the received signal by using the carrier frequency deviation estimation value, so as to complete carrier frequency synchronization.

13. A synchronization signal sending apparatus, comprising:

a determining unit, configured to determine a synchronization signal from a first transmit end, wherein the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells; and
a sending unit, configured to send the synchronization signal, so that a receive end completes signal synchronization by using the synchronization signal.

14. The apparatus according to claim 13, wherein the determining unit comprises:

an identifier determining subunit, configured to determine a cell identifier of a cell in which the transmit end is located;
a synchronization sequence determining subunit, configured to determine the first synchronization sequence corresponding to the cell identifier; and
a synchronization signal generating subunit, configured to perform differential processing on the first synchronization sequence to obtain the synchronization signal.

15. The apparatus according to claim 13 or 14, wherein the synchronization sequence determining subunit is specifically configured to determine the first synchronization sequence corresponding to the cell identifier, wherein the first synchronization sequence is a pseudo-random sequence, a gold sequence, or a ZC sequence.

16. A synchronization signal receiving apparatus, comprising:

a receiving unit, configured to receive, by a receive end, a received signal comprising a synchronization signal;
a determining unit, configured to determine a synchronization sequence used to generate the synchronization signal; and
a synchronization unit, configured to complete synchronization by using the synchronization sequence and the received signal.

17. The apparatus according to claim 16, wherein the determining unit comprises:

an identifier determining subunit, configured to determine a cell identifier of a cell in which the transmit end is located; and
a synchronization sequence determining subunit, configured to determine the synchronization sequence corresponding to the cell identifier.

18. The apparatus according to claim 16, wherein the determining unit comprises:

a determining subunit, configured to determine all candidate synchronization sequences;
a calculation subunit, configured to separately calculate a correlated peak of each candidate synchronization sequence and the received signal; and
a selection subunit, configured to use, as the synchronization sequence, a candidate synchronization sequence corresponding to a maximum correlated peak.

19. The apparatus according to claim 18, wherein the calculation subunit comprises:

a sliding window operation subunit, configured to perform sliding window operation on the received signal to determine at least one sliding window, wherein a length of the sliding window is a length of the candidate synchronization sequence plus 1 bit;
a correlated value determining subunit, configured to calculate a correlated value of a sliding window signal in each sliding window of the received signal and the candidate synchronization sequence; and
a correlated peak determining subunit, configured to use a maximum correlated value as the correlated peak of the candidate synchronization sequence and the received signal.

20. The apparatus according to claim 19, wherein the correlated value determining subunit comprises:

a differential demodulation subunit, configured to perform differential demodulation on the sliding window signal to obtain a first sequence; and
a correlated value calculation subunit, configured to calculate a correlated value of the first sequence and the candidate synchronization sequence.

21. The apparatus according to any one of claims 16 to 20, wherein
the synchronization unit is specifically configured to use a location of the correlated peak of the synchronization sequence and the received signal as a start location of the synchronization signal in the received signal, so as to complete symbol timing synchronization.

22. The apparatus according to any one of claims 16 to 20, wherein the synchronization unit comprises:

an estimation subunit, configured to perform carrier frequency deviation estimation on a second sequence by using the synchronization sequence, to obtain a carrier frequency deviation estimation value, wherein the second sequence is obtained by performing differential demodulation on the synchronization signal; and
a compensation subunit, configured to perform frequency compensation on the received signal by using the carrier frequency deviation estimation value, so as to complete carrier frequency synchronization.

23. A synchronization signal sending method, comprising:

determining a synchronization signal from a first transmit end, wherein the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell identifier of a cell in which the first transmit end is located, and is orthogonal, in the case of any delay, to a second feature sequence corresponding to a second transmit end; and the second transmit end and the first transmit end are located in different cells; and
sending the synchronization signal, so that a receive end completes signal synchronization by using the synchronization signal.

24. The method according to claim 23, wherein the basic sequence is a pseudo-random sequence, a gold sequence, or a ZC sequence; and the first feature sequence is a Hadamard sequence or a Walsh sequence.

25. The method according to claim 23, wherein the determining a synchronization signal from a transmit end of the present invention comprises:

determining the cell identifier of the cell in which the first transmit end is located;
determining the basic sequence corresponding to the cell identifier;
determining the first feature sequence corresponding to the cell identifier;
performing scalar multiplication or conjugate multiplication on the basic sequence and the first feature sequence, so as to obtain the synchronization sequence; and

performing differential processing on the synchronization sequence to obtain the synchronization signal.

26. The method according to claim 25, wherein the determining the basic sequence corresponding to the cell identifier comprises:

using, as the basic sequence, a pseudo-random sequence or a gold sequence generated by using an initialization seed corresponding to the cell identifier; or

using, as the basic sequence, a ZC sequence corresponding to a root sequence number corresponding to the cell identifier.

27. The method according to claim 25 or 26, wherein the determining the first feature sequence corresponding to the cell identifier comprises:

determining that a Hadamard sequence or a Walsh sequence corresponding to the cell identifier is the first feature sequence.

28. A synchronization signal receiving method, comprising:

receiving, by a receive end, a received signal comprising a synchronization signal;

determining a sequence group used to generate the synchronization signal, wherein the sequence group comprises a basic sequence and a feature sequence; and

completing synchronization by using the sequence group and the received signal.

29. The method according to claim 28, wherein the determining a sequence group used to generate the synchronization signal comprises:

determining a cell identifier of a cell in which the transmit end is located; and

determining the sequence group corresponding to the cell identifier.

30. The method according to claim 28, wherein the determining a sequence group used to generate the synchronization signal comprises:

determining all candidate sequence combinations, wherein each candidate sequence combination comprises a candidate feature sequence and a candidate basic sequence;

separately calculating a correlated peak of each candidate sequence combination and the received signal; and

using, as the sequence group, a candidate sequence combination corresponding to a maximum correlated peak.

31. The method according to claim 30, wherein the correlated peak of each candidate sequence combination and the received signal is separately calculated in the following manner:

performing sliding window operation on the received signal to determine at least one sliding window, wherein a length of the sliding window is a length of the candidate synchronization sequence plus 1 bit;

calculating a correlated value of a sliding window signal in each sliding window of the received signal and the candidate sequence combination; and

using a maximum correlated value as the correlated peak of the candidate sequence combination and the received signal.

32. The method according to claim 31, wherein a correlated peak of the sliding window signal in each sliding window and the candidate sequence combination is calculated in the following manner:

performing differential demodulation on the sliding window signal to obtain a first sequence;

performing feature removing processing on the first sequence by using the candidate feature sequence, to obtain a second sequence, wherein the feature removing processing is scalar multiplication or conjugate multiplication; and

calculating a correlated value of the second sequence and the candidate basic sequence.

33. The method according to any one of claims 28 to 32, wherein the completing synchronization by using the sequence group and the received signal comprises:

using a location of the correlated peak of the sequence group and the received signal as a start location of the synchronization signal in the received signal, so as to complete symbol timing synchronization.

34. The method according to any one of claims 28 to 32, wherein the completing synchronization by using the sequence group and the received signal comprises:

performing carrier frequency deviation estimation on the third sequence by using the basic sequence, to obtain a carrier frequency deviation estimation value, wherein the third sequence is a sequence obtained by performing feature removing processing on the synchronization sequence by using the feature sequence, and the synchronization sequence is obtained by performing differential demodulation on the synchronization signal; and

performing frequency compensation on the received signal by using the carrier frequency deviation estimation value, so as to complete carrier frequency synchronization.

35. A synchronization signal sending method, comprising:

determining a synchronization signal from a first transmit end, wherein the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells; and

sending the synchronization signal, so that a receive end completes signal synchronization by using the synchronization signal.

36. The method according to claim 35, wherein the determining a synchronization signal from a first transmit end comprises:

determining the cell identifier of the cell in which the transmit end is located;
determining the first synchronization sequence corresponding to the cell identifier; and
performing differential processing on the first synchronization sequence to obtain the synchronization signal.

37. The method according to claim 35 or 36, wherein the first synchronization sequence is a pseudo-random sequence, a gold sequence, or a ZC sequence.

38. A synchronization signal receiving method, comprising:

receiving, by a receive end, a received signal comprising a synchronization signal;
determining a synchronization sequence used to generate the synchronization signal; and
completing synchronization by using the synchronization sequence and the received signal.

39. The method according to claim 38, wherein the determining a synchronization sequence used to generate the synchronization signal comprises:

determining a cell identifier of a cell in which the transmit end is located; and
determining the synchronization sequence corresponding to the cell identifier.

40. The method according to claim 38, wherein the determining a synchronization sequence used to generate the synchronization signal comprises:

determining all candidate synchronization sequences;
separately calculating a correlated peak of each candidate synchronization sequence and the received signal; and
using, as the synchronization sequence, a candidate synchronization sequence corresponding to a maximum correlated peak.

41. The method according to claim 40, wherein the correlated peak of each candidate synchronization sequence and the received signal is separately calculated in the following manner:

performing sliding window operation on the received signal to determine at least one sliding window, wherein a length of the sliding window is a length of the candidate synchronization sequence plus 1 bit;
calculating a correlated value of a sliding window signal in each sliding window of the received signal and the candidate synchronization sequence; and
using a maximum correlated value as the correlated peak of the candidate synchronization sequence and the received signal.

42. The method according to claim 41, wherein the correlated value of the sliding window signal in each sliding window and the candidate synchronization sequence is calculated in the following manner:

performing differential demodulation on the sliding window signal to obtain a first sequence; and
calculating a correlated value of the first sequence and the candidate synchronization sequence.

43. The method according to any one of claims 38 to 42, wherein the completing synchronization by using the synchronization sequence and the received signal comprises:

using a location of the correlated peak of the synchronization sequence and the received signal as a start location of the synchronization signal in the received signal, so as to complete symbol timing synchronization.

44. The method according to any one of claims 38 to 42, wherein the completing synchronization by using the synchronization sequence and the received signal comprises:

performing carrier frequency deviation estimation on a second sequence by using the synchronization sequence, to obtain a carrier frequency deviation estimation value, wherein the second sequence is obtained by performing differential demodulation on the synchronization signal; and
performing frequency compensation on the received signal by using the carrier frequency deviation estimation value, so as to complete carrier frequency synchronization.

Sending apparatus

| Determining unit | Sending unit |

FIG. 1A

Identifier determining subunit

Basic sequence determining subunit

Feature sequence determining subunit

Synchronization sequence generating subunit

Synchronization signal generating subunit

101

FIG. 1B

Receiving apparatus

Receiving unit

Determining unit

Synchronization unit

FIG. 2

Sending apparatus

~ 301

| Determining unit |

~ 302

| Sending unit |

FIG. 3

~ 401

Receiving apparatus

| Receiving unit |

~ 402

~ 403

| Determining unit | | Synchronization unit |

FIG. 4

| Determine a synchronization signal from a first transmit end, where the synchronization signal is a signal obtained by performing differential processing on a synchronization sequence; the synchronization sequence is a product of a basic sequence and a first feature sequence; the basic sequence is a sequence in a sequence set in which sequences are cross-correlated; the first feature sequence corresponds to a cell in which the first transmit end is located, and is orthogonal, in the case of any delay, to a second feature sequence corresponding to a second transmit end; and the second transmit end and the first transmit end are located in different cells | ~ 501 |

↓

| Send the synchronization signal, so that a receive end completes signal synchronization by using the synchronization signal | ~ 502 |

FIG. 5

A receive end receives a received signal including a synchronization signal ⌐ 601

Determine a sequence group used to generate the synchronization signal, where the sequence group includes a basic sequence and a feature sequence ⌐ 602

Complete synchronization by using the sequence group and the received signal ⌐ 603

FIG. 6

Determine a synchronization signal from a first transmit end, where the synchronization signal is a signal obtained by performing differential processing on a first synchronization sequence corresponding to the first transmit end, the first synchronization sequence is a sequence in a sequence set in which sequences are cross-correlated, the first synchronization sequence corresponds to a cell identifier of a cell in which the first transmit end is located, the first synchronization sequence and a second synchronization sequence that is corresponding to a second transmit end are different sequences in the sequence set, and the second transmit end and the first transmit end are located in different cells ⌐ 701

Send the synchronization signal, so that a receive end completes signal synchronization by using the synchronization signal ⌐ 702

FIG. 7

| A receive end receives a received signal including a synchronization signal | 801 |

↓

| Determine a synchronization sequence used to generate the synchronization signal | 802 |

↓

| Complete synchronization by using the synchronization sequence and the received signal | 803 |

FIG. 8

```
Transmission
system

903
┌──────────────┐
│ Second transmit │
│      end       │
└──────────────┘

...        902
           ┌──────────────┐            901
           │ First transmit │    ┌──────────────┐
           │      end       │    │  Receive end   │
           └──────────────┘    └──────────────┘
```

FIG. 9

1003

Second transmit end

Transmission system

1001

... 1002

First transmit end

Receive end

FIG. 10

1102

Memory

Sending apparatus

1101

1103

Processor

Transceiver

FIG. 11

1202

Memory

Receiving apparatus

1201

Processor

1203

Transceiver

FIG. 12

1302

Memory

Sending apparatus

1301

Processor

1303

Transceiver

FIG. 13

1402

Memory

Receiving apparatus

1401

Processor

1403

Transceiver

FIG. 14

# INTERNATIONAL SEARCH REPORT

| International application No. |
| --- |
| **PCT/CN2014/084727** |

**A. CLASSIFICATION OF SUBJECT MATTER**

H04W 56/00 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNABS; SIPOABS: synchronization sequence, cell, cross-correlation, synchronization signal, feature sequence, multiply, synchronization, pseudo random sequence, orthogonal, basic sequence, orthogonality, cell ID, sequence, cell identity, walsh, pseudo random, interference, point multiplication

VEN: orthogonal+, gold, synchroni+, signal, M2M, ZC, walsh, hadamard, PN

**C. DOCUMENTS CONSIDERED TO BE RELEVANT**

| Category* | Citation of document, with indication, where appropriate, of the relevant passages | Relevant to claim No. |
| --- | --- | --- |
| X | CN 101375570 A (QUALCOMM INC.), 25 February 2009 (25.02.2009), description, paragraphs 0042, 0049, 0061-0063, 0079 and 0096 | 6, 16, 28, 38 |
| A | CN 101375570 A (QUALCOMM INC.), 25 February 2009 (25.02.2009), the whole document | 1-5, 7-15, 17-27, 29-37, 39-44 |
| A | CN 101772148 A (ZTE CORP.), 07 July 2010 (07.07.2010), the whole document | 1-44 |

☐ Further documents are listed in the continuation of Box C.  ☒ See patent family annex.

| | |
| --- | --- |
| * Special categories of cited documents:<br><br>"A" document defining the general state of the art which is not considered to be of particular relevance<br><br>"E" earlier application or patent but published on or after the international filing date<br><br>"L" document which may throw doubts on priority claim(s) or which is cited to establish the publication date of another citation or other special reason (as specified)<br><br>"O" document referring to an oral disclosure, use, exhibition or other means<br><br>"P" document published prior to the international filing date but later than the priority date claimed | "T" later document published after the international filing date or priority date and not in conflict with the application but cited to understand the principle or theory underlying the invention<br><br>"X" document of particular relevance; the claimed invention cannot be considered novel or cannot be considered to involve an inventive step when the document is taken alone<br><br>"Y" document of particular relevance; the claimed invention cannot be considered to involve an inventive step when the document is combined with one or more other such documents, such combination being obvious to a person skilled in the art<br><br>"&" document member of the same patent family |
| Date of the actual completion of the international search<br><br>30 April 2015 (30.04.2015) | Date of mailing of the international search report<br><br>**21 May 2015 (21.05.2015)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**QU, Zhen**<br><br>Telephone No.: (86-10) **62089137** |

Form PCT/ISA/210 (second sheet) (July 2009)

## INTERNATIONAL SEARCH REPORT
Information on patent family members

International application No.

**PCT/CN2014/084727**

| Patent Documents referred in the Report | Publication Date | Patent Family | Publication Date |
|---|---|---|---|
| CN 101375570 A | 25 February 2009 | TW 201301800 A | 01 January 2013 |
| | | TWI 415430 B | 11 November 2013 |
| | | CN 101375570 B | 25 June 2014 |
| | | EP 1989850 A2 | 12 November 2008 |
| | | WO 2007084988 A3 | 11 October 2007 |
| | | JP 2014161071 A | 04 September 2014 |
| | | EP 2026518 A2 | 18 February 2009 |
| | | WO 2007084988 A2 | 26 July 2007 |
| | | CN 102394681 A | 28 March 2012 |
| | | KR 20110005748 A | 18 January 2011 |
| | | JP 2009524362 A | 25 June 2009 |
| | | CN 102281115 A | 14 December 2011 |
| | | CA 2636201 C | 15 November 2011 |
| | | US 2007195906 A1 | 23 August 2007 |
| | | CN 102394681 B | 28 January 2015 |
| | | CA 2636201 A1 | 26 July 2007 |
| | | RU 2404529 C2 | 20 November 2010 |
| | | US 8130857 B2 | 06 March 2012 |
| | | EP 2026518 A3 | 29 April 2009 |
| | | RU 2008134111 A | 27 February 2010 |
| | | KR 101025073 B1 | 25 March 2011 |
| | | BRP 10706579 A2 | 29 March 2011 |
| | | KR 20080086934 A | 26 September 2008 |
| | | EP 2053816 A1 | 29 April 2009 |
| | | US 2010142490 A1 | 10 June 2010 |
| CN 101772148 A | 07 July 2010 | WO 2010075731 A1 | 08 July 2010 |

Form PCT/ISA/210 (patent family annex) (July 2009)